# FASCICULE DE BREVET EUROPEEN

(11) **EP 1 929 379 B1**
(45) Date de publication et mention de la délivrance du brevet: **14.07.2010**
(21) Numéro de dépôt: 06831234.7
(22) Date de dépôt: 27.09.2006
(51) Int. Cl.: G05B 15/02, G05B 23/02

(54) **DISPOSITIF ET PROCEDE POUR LE CONTROLE D'UN EQUIPEMENT**
VERFAHREN UND VORRICHTUNG ZUR STEUERUNG EINES GERÄTES
DEVICE AND METHOD FOR CONTROLLING AN EQUIPMENT

(30) Priorité: 30.09.2005 FR 0552962
(43) Date de publication de la demande: 11.06.2008
(73) Titulaire: AIRBUS OPERATIONS (S.A.S), 31060 Toulouse (FR)
(72) Inventeur: MAREY, Patrick, F-31470 Fontenilles (FR); LAVIGNE, Pierre-Numa, F-31500 Toulouse (FR); LOCATELLI, Alain, F-31170 Tournefeuille (FR); GAREL, Dominique, F-31650 Saint-Orens (FR)
(74) Mandataire: Schmit, Christian Norbert Marie
(86) Numéro de dépôt international: PCT/FR2006/050947
(87) Numéro de publication internationale: WO 2007/036674

(56) Documents cités:
- US-A- 4 943 919
- US-A- 6 115 656
- US-A1- 2004 078 123
- US-B1- 6 370 448

## Description

La présente invention concerne un dispositif et un procédé pour le contrôle d'un équipement, en particulier pour un équipement embarqué à bord d'un aéronef.

Plus précisément, la présente invention s'applique à un équipement comportant une pluralité de sous-ensembles, en particulier matériels et logiciels, et qui est muni d'une unité de stockage stockant au moins un ensemble d'informations, relatives à ces sous-ensembles.

On connaît de tels équipements à bord des aéronefs, lesquels sont des calculateurs embarqués, par exemple, comme le calculateur de commandes de vol, le calculateur de données aérodynamiques, ... Ces calculateurs sont capables de mémoriser un certain nombre d'événements relatifs à ces équipements, tels que des pannes, états,... Lors des procédures de maintenance de l'aéronef ou desdits équipements, un opérateur doit examiner les données mémorisées par chaque calculateur dans une unité de stockage afin de vérifier l'état de cet équipement pour déterminer s'il doit être réparé ou amélioré. US 2004/0078123 divulgue un tel système.

Pour ce faire, l'opérateur met en oeuvre un outil chargé de récupérer l'ensemble des données mémorisées par le calculateur sur cette unité de stockage. Ces données sont formulées de façon spécifique à chaque calculateur selon un code élaboré par le constructeur. Par conséquent, la récupération desdites données mémorisées dans les différents calculateurs est réalisée de façon hétérogène selon les différents calculateurs, nécessitant pour cela des outils spécifiques à chaque calculateur.

Les phases de maintenance d'un aéronef ou d'équipements de cet aéronef peuvent donc s'avérer longues et coûteuses, plusieurs opérateurs spécialisés étant le cas échéant nécessaires pour opérer une pluralité d'outils dédiés, chacun, à un équipement.

La présente invention a pour but de remédier à ces inconvénients. Elle a donc pour objectif de proposer un dispositif et un procédé pour le contrôle d'un équipement, lors d'une maintenance ou lorsque ce dernier est en panne, simple dans leur conception et dans leur mode opératoire, économique, et permettant le contrôle d'une pluralité d'équipements employant des codages des données différents, par configuration de ce dispositif de manière à l'adapter à chaque nouvel équipement contrôlé. On dispose ainsi d'un dispositif de contrôle d'un équipement universel.

A cet effet, l'invention concerne un procédé de contrôle d'un équipement comportant une pluralité de sous-ensembles et muni d'une unité de stockage stockant au moins un ensemble d'informations relatives à ces sous-ensembles, une liaison étant mise en oeuvre pour extraire cet ensemble d'informations, ces informations étant codées.

Selon l'invention, ce procédé comporte les étapes suivantes :
a) on enregistre dans un premier fichier sur un support d'enregistrement l'ensemble d'informations reçu au moyen de la liaison,
b) on détermine à partir d'au moins un deuxième fichier préalablement enregistré sur le support d'enregistrement les caractéristiques du codage pour identifier ces informations,
c) on analyse le contenu du premier fichier en utilisant lesdites caractéristiques du codage, et
d) on enregistre le résultat ainsi obtenu dans un troisième fichier sur le support d'enregistrement.

On entend par "contrôle", dans l'expression "dispositif et procédé pour le contrôle d'un équipement", une aide à la maintenance de cet équipement grâce à l'examen des données stockées dans cet équipement.

Dans différents modes de réalisation particuliers de ce procédé de contrôle, chacun ayant ses avantages particuliers et susceptibles de nombreuses combinaisons techniques possibles:
- l'étape c) comporte les étapes suivantes :
   c₁) on déformate les données,
   c₂) on identifie les données déformatées,
   c₃) on décode les données ainsi identifiées.
- on utilise à l'étape c₁) un décompresseur pour décompresser les données,
- l'étape c₁) comporte une étape de désencapsulation des données, On entend par "désencapsulation", notamment l'enlèvement des données spécifiques au codage telles que les données de sûreté (CRC, ...).
- la liaison est destinée à transmettre des signaux de type série,
Avantageusement, la liaison est une liaison série asynchrone de type RS 232 ou de type RS 422.
- la liaison est destinée à transmettre des signaux de type radio ou optique.
A titre illustratif, un convertisseur peut être mis en oeuvre pour transformer un signal de type série en un signal destiné à être transporté par un câble à fibre optique monomode ou multimodes, ce qui permet à la fois de transporter les données sur une plus grande distance au sein d'un aéronef, par exemple de l'équipement vers la cabine de pilotage, et de s'assurer d'une immunité aux interférences électriques. Alternativement, il peut encore s'agir d'une liaison filaire de type Ethernet.

L'invention concerne également un dispositif de contrôle d'un équipement pour la mise en oeuvre du procédé tel que décrit précédemment. Cet équipement comporte des sous-ensembles et est muni d'une unité de stockage stockant au moins un ensemble d'informations codées relatives à ces sous-ensembles.

Selon l'invention, le dispositif comprend :
- un moyen pour établir une liaison entre le dispositif de contrôle et l'unité de stockage,
- un moyen d'enregistrement pour enregistrer dans un premier fichier sur un support d'enregistrement au moins un ensemble d'informations relatives à ces sous-ensembles, ledit support d'enregistrement comportant un ensemble de fichiers préalablement enregistrés,
- une unité de traitement pour analyser le contenu du premier fichier en utilisant au moins un fichier préalablement enregistré.

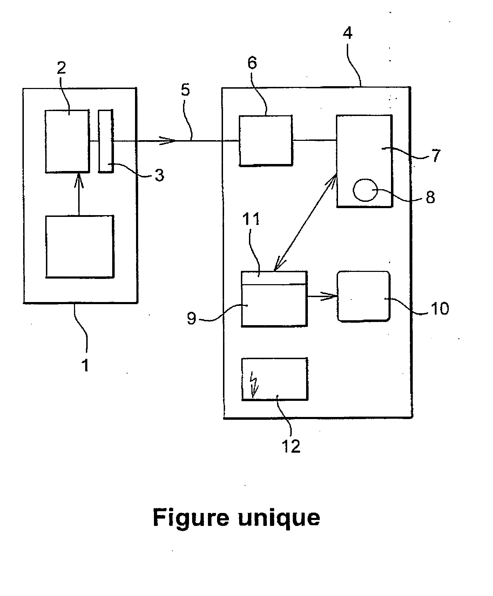

L'invention sera décrite plus en détail en référence à l'unique figure annexée, laquelle représente schématiquement un dispositif de contrôle d'un équipement selon un mode de réalisation particulier de l'invention;

Le procédé de contrôle d'un équipement de l'invention est particulièrement adapté au contrôle d'un équipement comportant une pluralité de sous-ensembles (matériels et/ou logiciels).

Cet équipement est également muni d'une unité de stockage stockant au moins un ensemble d'informations relatives à ces sous-ensembles. Cette unité de stockage est, de préférence, une mémoire non volatile.

Une liaison est mise en oeuvre pour extraire l'ensemble d'informations de l'unité de stockage vers le dispositif de contrôle, ces informations étant codées.

Dans une première étape du procédé de l'invention, on enregistre cet ensemble d'informations, reçu au moyen de cette liaison, dans un premier fichier. Ce dernier est stocké sur un support d'enregistrement.

Selon une seconde étape, on détermine à partir d'au moins un deuxième fichier les caractéristiques du codage pour identifier ces informations.

Ce deuxième fichier est préalablement enregistré sur le support d'enregistrement. Pour cela, le dispositif pour la mise en oeuvre de ce procédé qui comprend le support d'enregistrement, comporte également des moyens pour charger à distance le support d'enregistrement avec des fichiers de configuration.

Ce deuxième fichier est en effet un fichier de configuration qui comporte au moins une bibliothèque de codage permettant le décodage de l'ensemble d'informations codées.

Avantageusement, on envoie en même temps que ladite première étape d'extraction de l'ensemble d'informations stocké sur l'unité de stockage vers le support d'enregistrement, des références de cet équipement afin de permettre la détermination de ce deuxième fichier. Ces références comprennent, par exemple, le numéro définissant l'identité de cet équipement (PN - "Part Number").

Puis, on analyse le contenu du premier fichier en utilisant les caractéristiques du codage fourni par ledit au moins deuxième fichier.

Pour cela, lorsque l'ensemble d'informations a été préalablement compressé par un compresseur avant sa transmission de l'unité de stockage vers le dispositif de contrôle, on utilise un décompresseur pour reconstruire l'ensemble d'informations à partir des données enregistrées dans le premier fichier.

L'algorithme de décompression de données utilisé est fonction de l'algorithme de compression mis en oeuvre pour compresser les données sur l'unité de stockage. Cet algorithme de décompression peut être un algorithme de décompression sans perte du type RLE ou GZIP, ou encore l'algorithme de décompression Lempel-Ziv.

Les informations ainsi décompressées font alors l'objet d'une désencapsulation, puis on enregistre le résultat ainsi obtenu dans un fichier déformaté. Les données à désencapsuler sont définies par ledit au moins deuxième fichier.

Le déformatage des données consiste donc en une étape de désencapsulation des données et, éventuellement, en une étape préalable de décompression.

Après déformatage des données, on identifie les données déformatées enregistrées dans le fichier déformaté. Cette étape d'identification des données consiste à déterminer le type d'information traitée, par exemple, que cette information est relative à une phase de vol, le sous-ensemble de l'équipement dont provient cette information, ...

Après décodage des données ainsi identifiées en utilisant le code fourni par ledit au moins deuxième fichier, on enregistre le résultat ainsi obtenu dans un troisième fichier sur le support d'enregistrement. Lorsque le premier fichier ne nécessite pas de déformatage, on analyse directement le contenu du premier fichier en utilisant le code fourni par ledit au moins deuxième fichier.

De préférence, on affiche ensuite les données du troisième fichier sur des moyens d'affichage.

Pour cela, on peut avantageusement mettre en oeuvre un fichier de présentation préalablement enregistré sur le support d'enregistrement pour définir l'affichage des données du troisième fichier. Il s'agit de présenter les données de ce troisième fichier dans un rapport lisible pour l'opérateur assurant le contrôle de l'équipement.

Les moyens d'affichage peuvent permettre l'édition d'un document comportant un fichier texte ou un tableau. Il peut encore s'agir d'un écran de visualisation permettant d'afficher un tableau ou du texte.

Alternativement, les données du troisième fichier peuvent être exploitées pour réaliser des statistiques. A titre d'exemple, on peut connecter le dispositif 4 à une unité de traitement externe pour réaliser une analyse des pannes sur différents équipements.

La figure unique montre un dispositif de contrôle d'un équipement selon un mode de réalisation particulier de l'invention. Cet équipement 1 comprend une pluralité de sous-ensembles et est muni d'une unité de stockage 2. L'unité de stockage 2 est de préférence une mémoire non volatile.

Le dispositif de contrôle 4 comprend un moyen 5 pour établir une liaison entre le dispositif de contrôle 4 et l'unité de stockage 2. Ce moyen 5 pour établir une liaison est de préférence choisie dans le groupe comprenant une liaison série asynchrone de type RS 232 ou de type RS 422, une liaison filaire Ethernet, un émetteur d'ondes électromagnétiques placé sur l'équipement 1 et apte à coopérer avec un récepteur agencé sur le dispositif de contrôle 4.

Avant transmission des données de l'unité de stockage 2 vers le dispositif de contrôle 4 au moyen de la liaison 5, les données sont avantageusement compressées par un compresseur de données 3 afin de tenir compte du volume de données à transmettre et réduire ainsi le temps de transfert. Un algorithme de compression de données est alors mis en oeuvre. Ce dernier est avantageusement un algorithme de compression sans perte.

Le dispositif de contrôle 4 peut être susceptible de mémoriser sur un support d'enregistrement l'ensemble d'informations reçu au moyen de la liaison 5 et de restituer cet ensemble ultérieurement en connectant ce dispositif 4 à une unité de traitement externe. Néanmoins, il est lui-même apte à traiter cet ensemble d'informations.

Pour cela, le dispositif de contrôle 4 comporte un moyen d'enregistrement 6 pour enregistrer au moins un ensemble d'informations relatives à ces sous-ensembles dans un premier fichier sur un support d'enregistrement 7. Ce support d'enregistrement 7 comporte également un ensemble de fichiers 8 préalablement enregistrés. Ces fichiers 8 comprennent des bibliothèques de codage permettant le décodage de l'ensemble d'informations codées. Ces bibliothèques de codage peuvent se présenter sous la forme de tables ou encore de matrices de codage. Ces fichiers 8 sont également mis en oeuvre lors de l'étape d'analyse pour définir les données à désencapsuler et pour identifier les données après l'étape de déformatage. Ils sont enfin mis en oeuvre pour déterminer notamment le nombre de données à présenter.

Le dispositif de contrôle 4 comporte une unité de traitement 9 pour l'analyse du contenu du premier fichier en utilisant au moins un des fichiers 8 préalablement enregistrés. Le dispositif comprend de préférence des moyens pour charger à distance le support d'enregistrement 7 avec des fichiers de configuration. Il est ainsi possible d'augmenter le nombre de fichiers préalablement enregistrés et d'adapter ainsi en permanence le dispositif de contrôle.

Le résultat de l'analyse réalisée par l'unité de traitement 9 peut être affiché sur des moyens d'affichage 10.

Le dispositif peut comprendre un décompresseur 11 pour reconstruire l'ensemble d'informations lorsque celui a été compressé avant sa transmission de l'unité de stockage 2 de l'équipement 1 vers le dispositif de contrôle 4.

Il peut comprendre de plus une source d'alimentation 12 pour alimenter en énergie l'unité de stockage 2 lorsque l'équipement 1 n'est pas sous tension. Cette source d'alimentation 12 comporte par exemple au moins une pile ou une batterie rechargeable ou non. L'opérateur peut sélectivement alimenter ou non l'unité de stockage 2 avec cette source d'alimentation 12 en fonction de l'état de l'équipement 1, c'est-à-dire si ce dernier est sous tension ou non.

## Revendications

1. Procédé de contrôle d'un équipement embarqué à bord d'un aéronef comportant une pluralité de sous-ensembles et muni d'une unité de stockage stockant au moins un ensemble d'informations relatives auxdits sous-ensembles, une liaison étant mise en oeuvre pour extraire ledit ensemble d'informations, lesdites informations étant codées, **caractérisé en ce qu'**il comporte les étapes suivantes :
a) on enregistre dans un premier fichier sur un support d'enregistrement ledit ensemble d'informations reçu au moyen de ladite liaison,
b) on détermine à partir d'au moins un deuxième fichier préalablement enregistré sur le support d'enregistrement les caractéristiques du codage pour identifier ces informations,
c) on analyse le contenu du premier fichier en utilisant lesdites caractéristiques du codage, et
d) on enregistre le résultat ainsi obtenu dans un troisième fichier sur ledit support d'enregistrement.

2. Procédé selon la revendication 1, **caractérisé en ce que** l'étape c) comporte les étapes suivantes :
c₁) on déformate les données,
c₂) on identifie les données déformatées,
c₃) on décode les données ainsi identifiées.

3. Procédé selon la revendication 2, **caractérisé en ce qu'**à l'étape c₁), on utilise un décompresseur pour décompresser les données.

4. Procédé selon la revendication 2 ou 3, **caractérisé en ce que** l'étape c₁) comporte une étape de désencapsulation des données.

5. Procédé selon l'une quelconque des revendications 1 à 4, **caractérisé en ce qu'**on envoie lors de l'étape d'extraction dudit ensemble d'informations stockées sur ladite unité de stockage vers ledit support d'enregistrement, des références dudit équipement permettant de déterminer ledit au moins deuxième fichier.

6. Procédé selon l'une quelconque des revendications 1 à 5, **caractérisé en ce qu'**on affiche les données du troisième fichier sur des moyens d'affichage.

7. Procédé selon la revendication 6, **caractérisé en ce qu'**on met en oeuvre un fichier de présentation préalablement enregistré sur ledit support d'enregistrement pour définir l'affichage des données dudit troisième fichier.

8. Procédé selon l'une quelconque des revendications 1 à 7, **caractérisé en ce que** ladite liaison est destinée à transmettre des signaux de type série.

9. Procédé selon l'une quelconque des revendications 1 à 7, **caractérisé en ce que** ladite liaison est destinée à transmettre des signaux de type radio ou optique.

## Claims

1. A method of controlling equipment on board an aircraft including a plurality of subassemblies and provided with a storage unit storing at least one set of information relating to said subassemblies, a connection being used to extract said set of information, said information being coded, **characterised in that** it includes the following steps:
a) recording in a first file on a recording medium said set of information received by means of said connection,
b) determining from at least one second file previously recorded on the recording medium the characteristics of the coding in order to identify said information,
c) analysing the content of the first file using said characteristics of the coding, and
d) recording the result thereby obtained in a third file on said recording medium.

2. A method according to claim 1, **characterised in that** step c) includes the following steps:
c₁) deforming the data,
c₂) identifying the deformated data,
c₃) decoding the data thereby identified are.

3. A method according to claim 2, **characterised in that**, at step c₁), a decompressor is used to decompress the data.

4. A method according to claim 2 or 3, **characterised in that** step c₁) includes a step of de-encapsulating the data.

5. A method according to any one of claims 1 to 4, **characterised in that**, during the extraction step, said set of information stored on said storage unit is sent to said recording medium, references of said equipment making it possible to determine said at least second file.

6. A method according to any one of claims 1 to 5, **characterised in that** the data of the third file are displayed on display means.

7. A method according to claim 6, **characterised in that** a presentation file previously recorded on said recording medium is used to define the display of the data of said third file.

8. A method according to any one of claims 1 to 7, **characterised in that** said connection is designed to transmit signals of the serial type.

9. A method according to any one of claims 1 to 7, **characterised in that** said connection is designed to transmit signals of the radio or optical type.

## Patentansprüche

1. Verfahren zum Steuern einer Anlage, die an Bord eines Flugzeugs untergebracht ist, mehrere Unteranordnungen umfasst und mit einer Speichereinheit versehen ist, die wenigstens eine Gesamtheit von Informationen speichert, die auf die Unteranordnungen bezogen sind, wobei eine Verbindung verwendet wird, um die Gesamtheit von Informationen zu extrahieren, wobei die Informationen codiert sind, **dadurch gekennzeichnet, dass** es die folgenden Schritte umfasst:
a) Aufzeichnen der Gesamtheit von Informationen, die über die Verbindung empfangen werden, in einer ersten Datei auf einem Aufzeichnungsträger,
b) Bestimmen der Codierungseigenschaften anhand wenigstens einer zweiten Datei, die im Voraus auf den Aufzeichnungsträger aufgezeichnet worden ist, um diese Informationen zu identifizieren,
c) Analysieren des Inhalts der ersten Datei unter Verwendung der Codierungseigenschaften und
d) Aufzeichnen des auf diese Weise erhaltenen Ergebnisses in einer dritten Datei auf den Aufzeichnungsträger.

2. Verfahren nach Anspruch 1, **dadurch gekennzeichnet, dass** der Schritt c) die folgenden Schritte umfasst:
c₁) Deformatieren der Daten,
c₂) Identifizieren der deformatierten Daten,
c₃) Decodieren der auf diese Weise identifizierten Daten.

3. Verfahren nach Anspruch 2, **dadurch gekennzeichnet, dass** im Schritt c₁) ein Dekomprimierer verwendet wird, um die Daten zu dekomprimieren.

4. Verfahren nach Anspruch 2 oder 3, **dadurch gekennzeichnet, dass** der Schritt c₁) einen Schritt des Entpackens der Daten enthält.

5. Verfahren nach einem der Ansprüche 1 bis 4, **dadurch gekennzeichnet, dass** im Schritt des Extrahierens der in der Speichereinheit gespeicherten Gesamtheit von Informationen Referenzen der Anlage, die ermöglichen, die wenigstens eine zweite Datei zu bestimmen, zu dem Aufzeichnungsträger geschickt werden.

6. Verfahren nach einem der Ansprüche 1 bis 5, **dadurch gekennzeichnet, dass** die Daten der dritten Datei auf Anzeigemitteln angezeigt werden.

7. Verfahren nach Anspruch 6, **dadurch gekennzeichnet, dass** eine Darstellungsdatei verwendet wird, die vorher auf den Aufzeichnungsträger aufgezeichnet worden ist, um die Anzeige der Daten der dritten Datei zu definieren.

8. Verfahren nach einem der Ansprüche 1 bis 7, **dadurch gekennzeichnet, dass** die Verbindung dazu vorgesehen ist, Signale des seriellen Typs zu übertragen.

9. Verfahren nach einem der Ansprüche 1 bis 7, **dadurch gekennzeichnet, dass** die Verbindung dazu vorgesehen ist, Signale des Funktyps oder des optischen Typs zu übertragen.
